# EUROPÄISCHE PATENTANMELDUNG

(11) **EP 3 392 990 A1**
(43) Veröffentlichungstag der Anmeldung: **24.10.2018**
(21) Anmeldenummer: 17167323.9
(22) Anmeldetag: 20.04.2017
(51) Int. Cl.: H02G 5/02, H02M 7/00

(54) **KURZSCHLUSSFESTE STROMSCHIENENANORDNUNG**

(71) Anmelder: Siemens Aktiengesellschaft, 80333 München (DE)
(72) Erfinder: LESCOW, Nicolai, 40982 Osnabrück (DE); RABUS, Heiko, 91790 Geyern (DE)

(57) **Zusammenfassung**

Die Erfindung betrifft Stromschienenanordnung (1) mit mindestens einer ersten und einer zweiten Stromschiene (11,12), wobei die Stromschienen (11,12) zumindest abschnittsweise parallel zueinander angeordnet sind. Zur Verbesserung des Kurzschlussverhaltens wird vorgeschlagen, dass die erste Stromschiene (11) und die zweite Stromschiene (12) versetzt zueinander angeordnet sind. Weiter betrifft die Erfindung Stromrichter (3) mit einer solchen Stromschienenanordnung (1).

## Beschreibung

Die Erfindung betrifft eine Stromschienenanordnung mit mindestens einer ersten und einer zweiten Stromschiene, wobei die Stromschienen zumindest abschnittsweise parallel zueinander angeordnet sind. Ferner betrifft die Erfindung einen Stromrichter mit einer derartigen Stromschienenanordnung.

Stromschienen werden für einen niederinduktiven und verlustarmen elektrischen Stromfluss eingesetzt. Insbesondere in Stromrichtern werden Stromschienen eingesetzt, um beispielsweise die Halbleiter elektrisch zu kontaktieren. Für einen störungsfreien Betrieb wird die Zwischenkreisverschienung mit Stromschienen ausgeführt, die in einem Stromschienenpaket angeordnet sind. Damit kann ein niederinduktiver Aufbau realisiert werden.

Gerade in einem Kurzschlussfall unterliegen die Stromschienen und deren Befestigungen einer hohen Belastung durch die dann auftretenden Kräfte. Dabei dürfen keine Beschädigungen an der Stromschienenanordnung auftreten.

Bisher wurde das Stromschienenpaket zum Zwischenkreis als laminierte niederinduktive Verschienung ausgeführt. Die Stromschienen liegen dabei sehr eng nebeneinander um die Induktivität möglichst gering zu halten und sind großflächig ausgeführt um die mechanischen Kräfte gering zu halten. Dabei sind die Stromschienen wie beispielsweise Plus-Schiene, Mittenpotentialschiene, Minus-Schiene eines Dreipunktstromrichters jeweils mit einer Isolierstofffolie (Laminierung) versehen, da die Luftstrecken zwischen den blanken Kupferschienen entsprechend der Normvorgaben nicht eingehalten werden. Die drei Schienen werden mit großflächigen Abstützungen durch glasfaserverstärkte (GFK) Kunststoffplatten zu Schienenpaketen gebündelt, die so steif sind, dass sie die hohen Kurzschlusskräfte aufnehmen können. An den Verbindungsstellen der Schienenpakete wird die sonst geschlossene Laminierung unterbrochen. Die Schienen werden an diesen Stellen so abgekantet, dass sie zueinander hinreichende Abstände annehmen. Damit können die notwendigen Luft- und Kriechstrecken eingehalten werden. Durch viele Verschraubungen erfolgt die elektrische und mechanische Verbindung zum Nachbarschienenpaket.

Der Erfindung liegt die Aufgabe zu Grunde, eine Stromschienenanordnung mit verbessertem Kurzschlussverhalten anzugeben.

Die Aufgabe wird durch eine Stromschienenanordnung mit mindestens einer ersten und einer zweiten Stromschiene gelöst, wobei die Stromschienen zumindest abschnittsweise parallel zueinander angeordnet sind, wobei die erste Stromschiene und die zweite Stromschiene versetzt zueinander angeordnet sind. Ferner wird die Aufgabe durch einen Stromrichter mit einer derartigen Stromschienenanordnung gelöst.

Weitere vorteilhafte Ausgestaltungen der Erfindung sind in den abhängigen Ansprüchen angegeben.

Der Erfindung liegt die Erkenntnis zugrunde, dass sich die mechanischen und elektrischen Eigenschaften in positiver Weise durch den Aufbau beeinflussen lassen. Aus mechanischen Gesichtspunkten sollten die Stromschienen, beispielsweise drei Stromschienen bei einem Dreipunktstromrichter (Plus-Schiene, Mittenpotentialschiene, Minus-Schiene) möglichst weit räumlich auseinander liegen, damit die Kurzschlusskräfte möglichst klein sind. Aus elektrotechnischer Sicht sollten hingegen die Stromschienen, beispielsweise auch hier eine Plus-Schiene, Mittenpotentialschiene, Minus-Schiene, aber möglichst nah zusammen liegen, damit die Induktivität der Verschienung möglichst klein ist. Durch die versetzte Anordnung von einer ersten Stromschiene gegenüber einer zweiten und ggf. zusätzlich gegenüber einer dritten Stromschiene kann der oben dargestellte Widerspruch zwischen mechanischer und elektrischer Optimierung einfach und unerwartet gelöst werden.

Im Gegensatz zu den bereits bekannten Lösungen, welche beispielsweise in der Norm DIN EN 60865-1 (VDE 0103) behandelt werden, sind die einzelnen Stromschienen als Teilleiter nicht geschichtet hintereinander oder übereinander angeordnet, sondern die vom Kurzschluss betroffenen Schienen sind versetzt zueinander angeordnet und werden vorteilhafterweise durch hochbelastbare Stützer gehalten. Ein Kurzschluss entsteht beispielsweise zwischen Plus-Schiene und Mittenpotentialschiene, bzw. zwischen Minus-Schiene und Mittenpotentialschiene einer Stromschienenanordnung mit drei Stromschienen durch einen einfachen Fehler in nur einem Bauteil.

Im Allgemeinen kann davon ausgegangen werden, dass der Querschnitt einer Stromschiene länglich ausgebildet ist. Dies ist beispielsweise bei einer Rechteckform oder einer Ellipsenform der Fall. Dieser Querschnitt hat dann eine längere Ausdehnung, d.h. die längere Kanten oder Seite des Rechtecks, bzw. die längere Achse der Ellipse als Verbindung der beiden Hauptscheitel, und eine kürzere Ausdehnung, d.h. die kürzere Kante, d.h. Seite, des Rechtecks, bzw. die kürzere Achse der Ellipse als Verbindung der beiden Nebenscheitel. Aufgrund des zumindest abschnittsweisen parallelen Verlaufs ist es unerheblich an welcher Stelle der Querschnitt der Stromschienenanordnung betrachtet wird. Bei einem versatzlosen Aufbau durchdringt eine Gerade senkrecht zur längeren Ausdehnung die versatzlos angeordneten Stromschienen. Durchdringt die Gerade nur eine der Stromschienen bei gleicher Länge der längeren Ausdehnung, so sind die Stromschienen versetzt zueinander angeordnet. Sobald nur eine solche Gerade gebildet werden kann, spricht man von einer versetzten Anordnung. Ist eine erste Stromschiene, beispielsweise die mittlere von drei Stromschienen, versetzt angeordnet so ist diese in Richtung der längeren Ausdehnung, d.h. längs der längeren Ausdehnung, der Stromschiene verschoben. Um eine deutliche Verbesserung der elektrischen und mechanischen Eigenschaften zu erreichen, hat sich beispielsweise eine Verschiebung um 10mm als besonders vorteilhaft erwiesen, wenn die Stromschienen einen rechteckförmigen Querschnitt von 10mm x 100mm aufweisen. Dabei können die unterschiedlichen Stromschienen eine gleiche oder unterschiedliche Richtung der längeren Ausdehnung besitzen. Damit kann das Verhalten der Stromschiene im Kurzschlussfall, bei dem aufgrund der Stromhöhe große Kräfte auf die Stromschienen und deren Befestigungen wirken, deutlich verbessert werden. Durch diese Anordnung ist es möglich, bei relativ geringen Induktivitäten die entstehenden Kurzschlusskräfte zu verringern. Die Induktivität ist dabei noch innerhalb der zulässigen Grenzwerte und sowohl Platzbedarf, als auch Erreichbarkeit der Anschlussflächen (Montage/Wartung) sind vergleichbar gut.

Diese Anordnung weist eine Vielzahl von Vorteilen auf. So kann beispielsweise auf Sicherungen verzichtet werden, die einen auftretenden Kurzschlussstrom schnell abschalten und unzulässige Kräfte damit vermeidet bzw. zumindest nur kurzzeitig wirken lassen können. Ein Stromrichter kann beispielsweise durch diese Stromschienenanordnung sicherungslos ausgeführt sein. Somit ist mit der Stromschienenanordnung ein sicherungsloses Stromrichterkonzept realisierbar. Dieses Konzept ist gegenüber einem Design mit Sicherungen deutlich platzsparender oder kostengünstiger realisierbar. Gegenüber einer Standardlösung nach DIN EN 60865-1 (VDE 0103) kann darüber hinaus aufgrund der deutlich geringeren Kräfte zwischen den Stromschienen auf ein Großteil von Abstützungen zwischen den Stromschienen verzichtet werden. Ebenso ist die erfindungsgemäße Stromschienenanordnung deutlich platzsparender insbesondere an den Anschlusspunkten. Darüber hinaus ist das Einhalten von Anforderungen bezüglich Luft- und Kriechstrecken deutlich einfacher.

Weitere Vorteile bestehen darin, dass sich die wirkenden Kräfte in Richtung der längeren Ausdehnung und in Richtung der kürzeren Ausdehnung der Stromschiene aufteilen. Damit können diese Kräfte besser beherrscht werden. Gleichzeitig kann dabei das höhere Widerstandsmoment der Stromschiene, wie beispielsweise einer Kupferschiene, in Richtung der längeren Ausdehnung besser genutzt werden, das zu einer Verringerung der Kurzschlussströme führt. Aus Sicht der Mechanik ist die Aufteilung in die beiden Ausdehnungsrichtungen des Stromschienenquerschnitts nicht unbedingt vorteilhaft. Allerdings kommt der Vorteil dadurch, dass es eine Kraftkomponente in Richtung des höheren Widerstandsmomentes zugunsten einer Verringerung der Kraftkomponente in Richtung des kleineren Widerstandsmomentes auftritt. Am besten wäre jedoch nur eine Kraft in Richtung des größeren Widerstandsmomentes. Doch dies steht dem Kompromiss mit der Elektrotechnik im Widerspruch.

Weiter kann kostengünstiges Kupferstangenmaterial verwendet werden, das geringere Anforderungen an die Festigkeit besitzt. Auf eine kostenintensive Laminierung mit Isolierfolie kann durch die größeren Abstände verzichtet werden. Die Abstützung kann bedingt durch die größeren Abstände und versetzte Anordnung reduziert werden. Dies äußert sich insbesondere in einer geringeren Anzahl von Stützern zwischen den Stromschienen. Durch die versetzte Anordnung der ersten Schiene, beispielsweise der Mittenpotentialschiene einer Stromschienenanordnung mit drei Stromschienen steigt die Montage-/Wartungsfreundlichkeit. Die Stromschienen können aufgrund der geringeren Kräfte durch weniger Schraubverbindungen miteinander verbunden werden. Wie bereits erwähnt benötigt der Aufbau nur einen relativ geringen Platzbedarf und das Design ist besonders robust in Bezug auf Fehleranfälligkeit.

Die bisher in Stromrichtern übliche und teilweise recht empfindliche, fehleranfällige flexible Anbindung an die Kondensatoren (eingelötete dünne Membranen an der laminierten Schiene) können durch die neue Anordnung durch einfache, stabile flexible Kupferschienen ersetzt werden.

Diese Ausführung ist darüber hinaus einfach und preisgünstig realisierbar. Es können mit diesem Aufbau gültige Normengrenzwerte und Abstände auf einfache Weise eingehalten werden. Darüber hinaus ist der Aufbau auch deutlich weniger fehleranfällig für Überschläge aufgrund von Verschmutzung, ungünstige Umweltbedingungen (z.B. auch Ungeziefer). Aufgrund des einfachen Aufbaus sind Ausfälle wegen unachtsamer Montage, wie sie teilweise bei geschichteten Stromschienenpaketen, die aus dem Stand der Technik bekannt sind, weniger wahrscheinlich, da es keine Vielzahl von Schrauben an teilweise schwer zugänglichen Positionen vorhanden sind und bei deren Montage Isolierfolie beschädigt werden kann.

Bei einer vorteilhaften Ausgestaltung der Erfindung weist die Stromschienenanordnung eine dritte Stromschiene auf, wobei die erste Stromschiene und die dritte Stromschiene versetzt zueinander angeordnet sind. Bei dieser Ausgestaltung sind mindestens drei Stromschienen vorhanden. Diese Ausgestaltungkommt insbesondere bei einer Stromschienenanordnung mit drei Stromschienen zur Anwendung. Ein typisches Beispiel hierfür ist die DC Verschienung eines 3-level-Stromrichters. Hierbei ist die erste und die zweite Stromschiene zueinander versetzt sowie die erste und die dritte Stromschiene zueinander versetzt. Da ein Kurzschluss bei einem üblicherweise einfachen Fehler nur zwischen Plus-Schiene und Mittenpotential-Schiene oder Minus-Schiene und Mittenpotential-Schiene auftritt, hat es sich als besonders vorteilhaft erwiesen, die erste Schiene als Mittenpotential-Schiene auszuführen, da diese gegenüber den anderen beiden Schienen versetzt ist.

Die Mittelpunkte der Querschnitte der einzelnen Stromschienen bilden durch die versetzte Anordnung ein Dreieck. Besonders günstig hat es sich erwiesen, wenn die Querschnitte ein gleichschenkliges Dreieck bilden, da dann das Kurzschlussverhalten unabhängig davon ist, ob es an der Plus- oder der Minus-Schiene auftritt. Darüber hinaus ist der Aufbau bezüglich der Potentiale und damit auch das Betriebsverhalten symmetrisch.

Bei einer weiteren vorteilhaften Ausgestaltung der Erfindung sind die zweite Stromschiene und die dritte Stromschiene versatzlos zueinander angeordnet. Die versatzlose Anordnung bedeutet, dass diese nicht zueinander in Richtung der längeren Ausdehnung versetzt sind. Da zwischen der ersten und der zweiten Stromschiene mit relativ geringer Wahrscheinlichkeit Kurzschlüsse zu erwarten sind, wenn es sich hierbei um Plus- und Minus-Schiene handelt, können diese Schienen auch versatzlos zueinander angeordnet werden. Darüber hinaus sind die Kräfte im Kurzschlussfall eher gering aufgrund der Entfernung der Schienen zueinander. Da diese Schienen nicht in einem Kommutierungskreis liegen, sind die Anforderungen bezüglich des niederinduktiven Verhaltens geringer. Durch die versatzlose Anordnung kann ein hinreichend niederinduktiver Aufbau für die zweite und dritte Stromschiene bei gleichzeitig gutem Kurzschlussverhalten sichergestellt werden.

Bei einer weiteren vorteilhaften Ausgestaltung der Erfindung weisen die Stromschienen einen im Wesentlichen rechteckförmigen Querschnitt auf, wobei die paarweise zueinander versetzten Stromschienen in Richtung einer längeren Kante, d.h. der längeren Seite, des rechteckförmigen Querschnitts versetzt sind. Der Querschnitt von Stromschienen weicht an ihren Ecken oftmals von der Rechteckform ab. Die Kanten der Stromschiene sind dabei beispielsweise abgerundet, um hohe Feldstärken in diesem Bereich zu vermeiden. Dieser Eigenschaft wird durch die Formulierung "im Wesentlichen rechteckförmig" Rechnung getragen.

Die Zwischenkreisverschienung wird dabei beispielsweise als Verbundpaket mit zur Umrichter Rückwand liegender positiver Zwischenkreisschiene, im Abstand von beispielsweise 90mm dahinter liegender negativer Zwischenkreisschiene und mittig darüber angeordneter Mittenpotentialschiene ausgeführt. Die Querschnitte der einzelnen Schienen betragen beispielsweise 10mm x 100mm = 1000mm². Durch die versetzt angeordnete Mittenpotential-Schiene erhöht sich nicht nur der wirksame Abstand zwischen den unterschiedlichen Stromschienen, was eine Verringerung der Kurzschlusskraft zur Folge hat. Sondern die Kraft teilt sich in eine Komponente in Richtung der längeren Ausdehnung (lange Seitenkante des rechteckförmigen Querschnitts) und kürzere Ausdehnung (kurze Seitenkante des rechteckförmigen Querschnitts) auf, wobei bedingt durch den Rechteckquerschnitt der Kupferschienen mit beispielsweise 10mm x 100mm das viel höhere Widerstandsmoment des Kupferstangenmaterials in Richtung der längeren Ausdehnung genutzt wird. Somit ist es möglich, den größten vorkommender Mittenabstand benachbarter Stützpunkte zu erhöhen.

In einer vorteilhaften Ausgestaltung ist die erste Stromschiene zwischen einer ersten und einer zweiten Ebene angeordnet. Die erste und zweite Ebene erstreckt sich senkrecht zur Querschnittsfläche und parallel zur längeren Kante des Querschnitts der zweiten bzw. dritten Stromschiene. Die längere Kante ergibt sich als die längere Seitenlinie des rechteckförmigen Querschnitts der Stromschiene. Damit ist ein besonders platzsparender Aufbau erreichbar. Die bei dieser Anordnung auftretenden Kräfte im Kurzschlussfall sind besonders gering, so dass die Stromschienen wie auch vorhandene Stützer besonders kostengünstig herstellbar sind. Für die Stromschienen kann Kupfermaterial mit geringerer Festigkeit verwendet werden, was deutlich günstiger ist.

Bei einer weiteren vorteilhaften Ausgestaltung der Erfindung sind die Stromschienen derart zueinander ausgerichtet, dass die längeren Kanten des rechteckförmigen Querschnitts der jeweiligen Stromschienen zueinander parallel sind. Auch diese Anordnung führt zu einer weiteren Absenkung der auftretenden Kräfte im Kurzschlussfall und aus den oben genannten Gründen zu einer weiteren Reduktion von Materialkosten. Gleichzeitig ist ein Dreipunkt-Stromrichter mit diesem Aufbau elektrisch symmetrisch aufgebaut, so dass sich ein symmetrisches Betriebsverhalten ergibt.

Bei einer weiteren vorteilhaften Ausgestaltung der Erfindung sind mindestens zwei der Stromschienen mittels mindestens eines Stützers mechanisch miteinander verbunden, wobei der Stützer elektrisch isolierend ausgeführt ist. Es kann auf eine vollständige und großflächige Verbindung zwischen den Stromschienen verzichtet werden, da die auftretenden Kräfte im Kurzschlussfall dies nicht mehr erfordern. Lediglich eine Anzahl von Stützern wird zur Positionierung der Stromschienen verwendet. Diese Stützer nehmen im Kurzschlussfall die entstehenden Kräfte auf und sollten daher stabil ausgeführt werden. Aufgrund der geringen Kurzschlussströme kann auf eine großflächige Anordnung von stützenden Mitteln zwischen den Stromschienen verzichtet werden, da die vorhandene Festigkeit des Kupfers, auch bei geringer Festigkeit der Kupferschiene, in Verbindung mit wenigen Stützern ausreicht, Verformungen bei Stützern und Stromschienen zu verhindern.

Dadurch ist es möglich, mit einer kostentechnisch im Rahmen bleibenden Anzahl von Stützern den hohen Kurzschlusskräften standzuhalten, ohne dass es zu Verformungen der Kupferschienen kommt.

Die Stützer weisen darüber hinaus ein isolierendes Material auf, um die damit mechanisch verbundenen Stromschienen elektrisch voneinander zu isolieren.

Bei einer weiteren vorteilhaften Ausgestaltung der Erfindung umfasst der Stützer einen hochbelastbaren Schichtpressstoff nach DIN EN 60893-3-2, insbesondere das HGW-Material EP-GC 202. Dieses Material eignet sich aufgrund seiner hohen Festigkeit und isolierenden Eigenschaften ideal für die Verwendung im Stützer. Darüber hinaus ist es relativ preisgünstig am Markt verfügbar.

Die Stützer müssen im Kurzschlussfall sehr hohe Kräfte aufnehmen. Dies ist durch die Wahl des hochbelastbaren HGW-Materials EP-GC 202 (DIN EN 60893-3-2) im Zusammenhang mit einer hoch tragfähigen Form möglich. Dabei sind die Luftstrecken zwischen den Stützern der einzelnen Phasen und die Kriechstrecken bei der Anordnung der Schrauben zwischen Verschraubung und Kupferschiene einzuhalten.

Bei einer weiteren vorteilhaften Ausgestaltung der Erfindung ist der Stützer derart ausgelegt, die bei einem in den Stromschienen fließenden Kurzschlussstrom auftretenden Kräfte zwischen den mit dem Stützer verbundenen Stromschienen zerstörungsfrei aufzunehmen. Ein Kurzschlussstrom ist ein Strom, der über die dauerhafte Strombelastbarkeit der Stromschiene hinausgeht. So würde ein Kurzschlussstrom eine Stromschiene unzulässig erwärmen, wenn dieser dauerhaft in der Stromschiene fließt. Kurzschlussströme werden beispielsweise durch die im System vorhandenen Spannungen bestimmt. Ebenso können die elektrischen Komponenten Einfluss auf die Höhe des Kurzschlussstromes haben. Der Kurzschlussstrom wird für den Anwendungsfall, beispielsweise im Stromrichter, rechnerisch bestimmt. Die Stützer müssen dann in Bezug auf ihre mechanische Belastbarkeit eine entsprechend hohe Festigkeit aufweisen.

Bei einer weiteren vorteilhaften Ausgestaltung der Erfindung ist der Stützer für einen Wert des Kurzschlussstroms von mehr als 100kA ausgelegt. Die Kräfte sind bei Kurzschlussströmen in dieser Größenordnung derart hoch, dass sich die Stromschienenanordnung besonders positiv auf die entstehenden Kräfte auswirkt. In diesem Fall bringt die Stromschienenanordnung einen hohen wirtschaftlichen Vorteil gegenüber einem geschichteten Aufbau.

Bei einer weiteren vorteilhaften Ausgestaltung der Erfindung weist der Stromrichter IGCT Halbleiterbauelemente auf. IGCT Bauelemente können im Fehlerfall durchlegieren und damit einen Kurzschluss im System bilden. Daher ist der Schutz im Kurzschlussfall für einen Stromrichter mit IGCT Halbleiterelementen deutlich wichtiger für als Stromrichter mit alternativen Halbleiterelementen. Aus diesem Grund ist der Einsatz der Stromschienenanordnung für diese Art von Halbleiterbauelementen besonders vorteilhaft, da hier kostspielige Schäden im Kurzschlussfall vermieden werden können.

Im Folgenden wird die Erfindung anhand der in den Figuren dargestellten Ausführungsbeispiele näher beschrieben und erläutert. Es zeigen:
- FIG 1: eine Stromschienenanordnung
- FIG 2, FIG 3: Querschnitte durch eine Stromschienenanordnung
- FIG 4: Stromschienenanordnung für einen Stromrichter

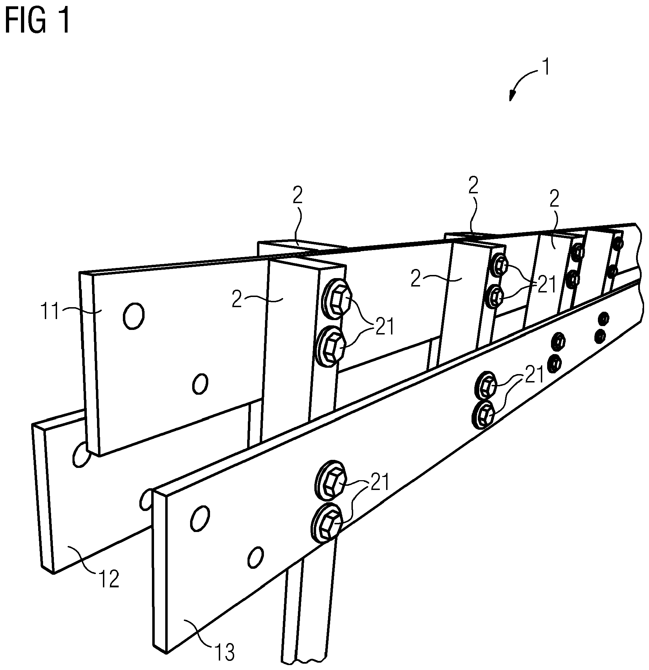

Die FIG 1 zeigt die perspektivische Darstellung einer Stromschienenanordnung 1. Diese Stromschienenanordnung 1 weist drei Stromschienen 11, 12, 13 auf. Die erste Stromschiene 11 ist gegenüber der zweiten und dritten Stromschiene 12, 13 versetzt angeordnet, indem diese Stromschiene 11 etwas höher liegt als die anderen Stromschienen 12, 13. Wie bereits erwähnt, ist die Ausführung der ersten Stromschiene 11 als Mittenpotentialschiene daher besonders vorteilhaft, da zwischen dieser Schiene und der Plus-Schiene oder der Minus-Schiene ein Kurzschluss bereits bei einem einfachen Bauteilfehler auftreten kann. Mechanisch verbunden sind die Stromschienen 11, 12, 13 über Stützer 2. Die Stützer 2 verbinden jeweils zwei der Stromschienen 11, 12, 13 mechanisch miteinander. Dies erfolgt dabei in vorteilhafter Weise mittels Verschraubungen 21. Diese Stützer 2 sind über die Länge der Stromschienen 11, 12, 13 verteilt an den Stromschienen 11, 12, 13 angebracht.

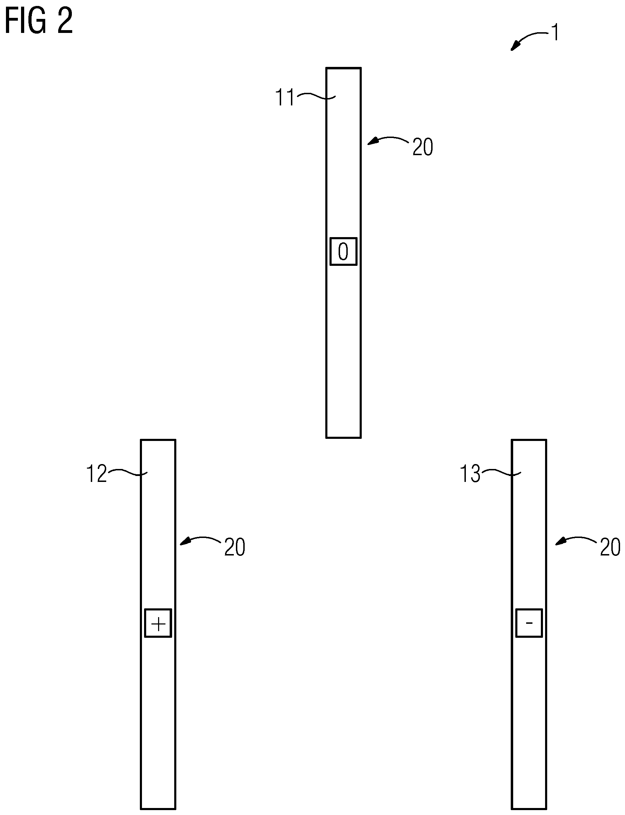

Die FIG 2 zeigt den Querschnitt durch eine Stromrichteranordnung 1 mit drei Stromschienen 11, 12, 13. Deutlich erkennbar ist die erste Stromschiene 11 versetzt gegenüber der zweiten und dritten Stromschiene 12, 13, indem die erste Stromschiene 11 in Richtung, das heißt längs, der langen Kante 20 des rechteckförmigen Querschnitts versetzt angeordnet ist. In diesem Ausführungsbeispiel trägt die erste Stromschiene 11 das Mittenpotential, gekennzeichnet mit "0", die zweite Stromschiene 12 das Pluspotential, gekennzeichnet mit "+" und die dritte Stromschiene 13 das Minuspotential, gekennzeichnet mit "-". In dieser Anordnung bilden die Mittelpunkte der Querschnittsflächen ein gleichschenkliges Dreieck. Dies begünstigt das Betriebsverhalten eines Stromrichters mit einer solchen Stromschienenanordnung, da die Stromschienenanordnung zwischen positiven Potential und Mittenpotential sowie negativem Potential und Mittenpotential symmetrisch aufgebaut ist.

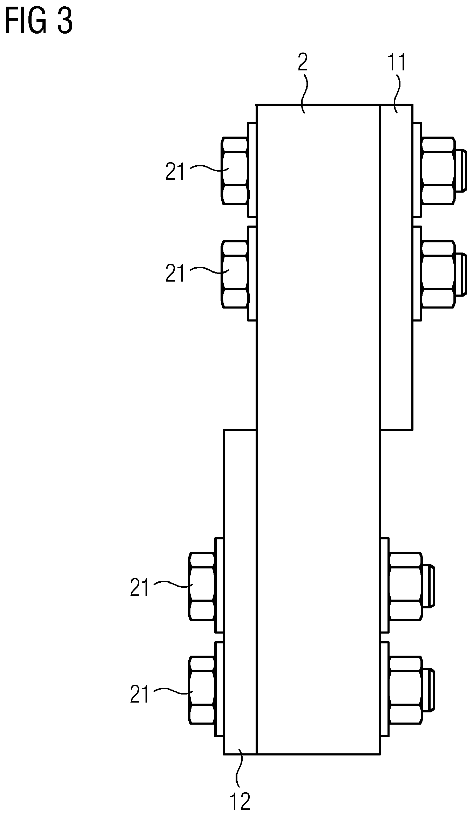

Die FIG 3 zeigt den Schnitt durch zwei Stromschienen 11, 12 an der Stelle eines Stützers 2. Zur Vermeidung von Wiederholungen wird auf die Beschreibung zu den Figuren 1 und 2 sowie auf die dort eingeführten Bezugszeichen verwiesen. Die erste Stromschiene 11 und die zweite Stromschiene 12 sind versetzt zueinander angeordnet. Der Stützer 2 dient dazu, die Lage der beiden Stromschienen 11, 12 zueinander zu fixieren. Um auch im Kurzschlussfall die Kräfte aufnehmen zu können, sollte der Stützer 2 eine hoch tragfähige Form aufweisen. Die Stromschienen 11, 12 werden mittels Verschraubungen 21 an dem Stützer 2 befestigt.

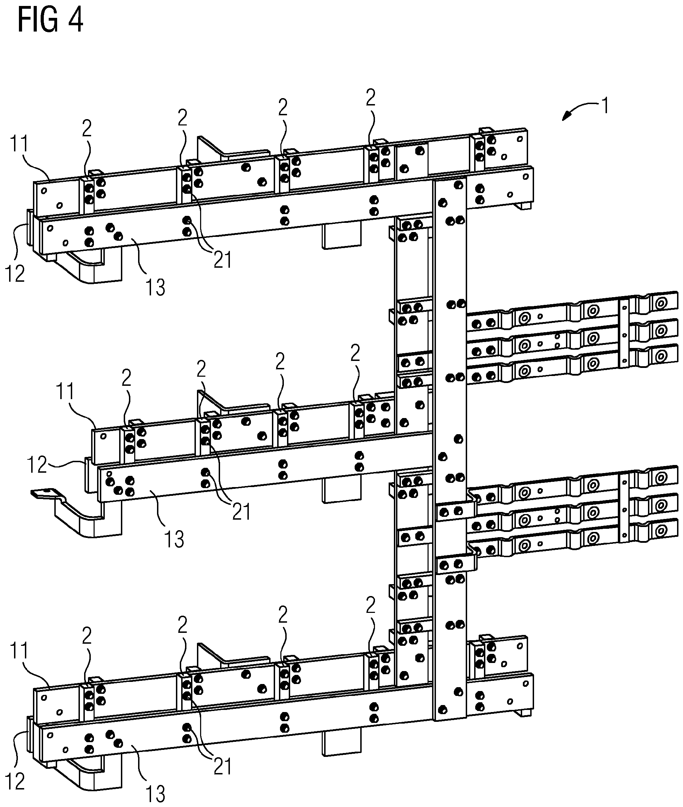

Die FIG 4 zeigt eine Stromschienenanordnung 1 für einen dreiphasigen Stromrichter. Dabei handelt es sich um einen Dreipunktstromrichter, da diese Stromschienenanordnung 1 drei Stromschienen 11, 12, 13 und somit drei Gleichspannungspotentiale aufweist. Deutlich zu erkennen sind die übereinander angeordneten Phasen des Stromrichters 3. Jede dieser Phasen ist mit einem oder mehreren hier nicht dargestellten Halbleitermodulen verbunden, die eine Verbindung des jeweiligen wechselspannungsseitigen Ausgangs mit einem der Gleichspannungspotentiale ermöglicht. Zur Vermeidung von Wiederholungen wird auf die Beschreibung zu den Figuren 1 bis 3 sowie auf die dort eingeführten Bezugszeichen verwiesen.

Zusammenfassend betrifft die Erfindung eine Stromschienenanordnung mit mindestens einer ersten und einer zweiten Stromschiene, wobei die Stromschienen zumindest abschnittsweise parallel zueinander angeordnet sind. Zur Verbesserung des Kurzschlussverhaltens wird vorgeschlagen, dass die erste Stromschiene und die zweite Stromschiene versetzt zueinander angeordnet sind. Weiter betrifft die Erfindung Stromrichter mit einer solchen Stromschienenanordnung.

## Patentansprüche

1. Stromschienenanordnung (1) mit mindestens einer ersten und einer zweiten Stromschiene (11,12), wobei die Stromschienen (11,12) zumindest abschnittsweise parallel zueinander angeordnet sind, wobei die erste Stromschiene (11) und die zweite Stromschiene (12) versetzt zueinander angeordnet sind.

2. Stromschienenanordnung (1) nach Anspruch 1, wobei die Stromschienenanordnung (1) eine dritte Stromschiene (13) aufweist, wobei die erste Stromschiene (11) und die dritte Stromschiene (13) versetzt zueinander angeordnet sind.

3. Stromschienenanordnung (1) nach einem der Ansprüche 1 oder 2, wobei die zweite Stromschiene (12) und die dritte Stromschiene (13) versatzlos zueinander angeordnet sind.

4. Stromschienenanordnung (1) nach einem der Ansprüche 1 bis 3, wobei die Stromschienen (11,12,13) einen im Wesentlichen rechteckförmigen Querschnitt aufweisen, wobei die paarweise zueinander versetzten Stromschienen (11,12,13) in Richtung einer längeren Kante (20) des rechteckförmigen Querschnitts versetzt sind.

5. Stromschienenanordnung (1) nach Anspruch 4, wobei die Stromschienen derart zueinander ausgerichtet sind, dass die längere Kante (20) des rechteckförmigen Querschnitts der jeweiligen Stromschienen (11,12,13) zueinander parallel sind.

6. Stromschienenanordnung (1) nach einem der Ansprüche 1 bis 5, wobei mindestens zwei der Stromschienen (11,12,13) mittels mindestens eines Stützers (2) mechanisch miteinander verbunden sind, wobei der Stützer (2) elektrisch isolierend ausgeführt ist.

7. Stromschienenanordnung (1) nach Anspruch 6, wobei der Stützer (2) einen hochbelastbaren Schichtpressstoff nach DIN EN 60893-3-2, insbesondere das HGW-Material EP-GC 202, umfasst.

8. Stromschienenanordnung (1) nach einem der Ansprüche 6 oder 7, wobei der Stützer (2) derart ausgelegt ist, die bei einem in den Stromschienen (11,12,13) fließenden Kurzschlussstrom auftretenden Kräfte zwischen den mit dem Stützer verbundenen Stromschienen (11,12,13) zerstörungsfrei aufzunehmen.

9. Stromschienenanordnung (1) nach Anspruch 8, wobei der Stützer (2) für einen Wert des Kurzschlussstroms von mehr als 100kA ausgelegt ist.

10. Stromrichter (3) mit einer Stromschienenanordnung (1) nach einem der Ansprüche 1 bis 9.

11. Stromrichter (3) nach Anspruch 10, wobei der Stromrichter IGCT Halbleiterbauelemente aufweist.
